(19) Europäisches Patentamt / European Patent Office / Office européen des brevets

(11) **EP 1 920 241 B1**

(12) **EUROPEAN PATENT SPECIFICATION**

(45) Date of publication and mention
of the grant of the patent:
**01.07.2015 Bulletin 2015/27**

(21) Application number: **05776408.6**

(22) Date of filing: **01.09.2005**

(51) Int Cl.:
*G01N 27/02* [(2006.01)]  *G01N 27/04* [(2006.01)]
*G01N 27/72* [(2006.01)]  *G01B 11/08* [(2006.01)]
*G01B 7/12* [(2006.01)]  *B23K 9/095* [(2006.01)]

(86) International application number:
**PCT/PT2005/000011**

(87) International publication number:
**WO 2007/027117 (08.03.2007 Gazette 2007/10)**

(54) **CONDUCTOR WIRE PROPERTIES DETECTOR**

DETEKTOR ZUR BESTIMMUNG VON EIGENSCHAFTEN EINES LEITFÄHIGEN DRAHTES

DÉTECTEUR DE PROPRIÉTÉS DE FIL CONDUCTEUR

(84) Designated Contracting States:
**AT BE BG CH CY CZ DE DK EE ES FI FR GB GR
HU IE IS IT LI LT LU LV MC NL PL PT RO SE SI
SK TR**

(43) Date of publication of application:
**14.05.2008 Bulletin 2008/20**

(73) Proprietors:
• **Joao R. Matos S.A.**
  **3810 - 375 Aveiro (PT)**
• **Instituto de Soldadura E. Qualidade**
  **2740 - 120 Porto Salvo (PT)**

(72) Inventors:
• **JOSÉ DA SILVA PERPÉTUA, Milton**
  **3040 Coimbra (PT)**
• **MANUEL OLIVEIRA RAPOSO, Severino**
  **2725 - 177 Mem Martins (PT)**
• **EMANUEL RAMOS PEREIRA GARCIA, José**
  **3880 - 000 Ovar (PT)**

(74) Representative: **Alves Moreira, Pedro**
  **Rua do Patrocinio, 94**
  **1399-019 Lisbon (PT)**

(56) References cited:
**EP-A- 0 878 263    EP-A- 1 516 688
US-A- 5 528 142    US-B2- 6 852 949**

## Description

### Technical field

The present invention is related to the welding machines field. More specifically it is related to a device that detects the conductive wire diameter and two other wire parameters, Resistivity and Magnetic Permeability. These three parameters are used for automatic selection of the welding parameters for the detected weld wire material.

### Background of the invention

There are several processes for welding. One of these processes uses a weld wire bobbin and is called MIG/MAG (Metal Inert Gas/ Metal Active Gas). The wire is pulled by a motor at a fixed wire speed and a voltage is applied by the weld machine power supply. In this process a protection gas is used to avoid the weld pool oxidation.

Present day weld machines use different power sources like choppers, inverters, phase controllers, variable reluctance transformers and others. The power source supplies power to create and maintain the electrical arc. The machine uses a wire feeder for supplying the wire to the weld, and in parallel they open an electrovalve for the gas to flow and protect the weld pool against oxidation.

Another weld process is the Metal Core, which also uses a metal bobbin, but the wire is hollow and contains a flux that protects the weld against oxidation.

The selection of the weld wire is dependent on the base material to weld, for example, if the base material is stainless steel then the wire must also be a stainless steel. In a conventional weld machine there are at least two parameters to control the weld: voltage (or current) and wire speed.

Some more sophisticated weld machines also use the control of the output inductance and other type of controls. The gas is only turned on and off, with the flow being previously selected by the welder.

In a conventional machine, the welder must select the following parameters: wire type and diameter, gas type, weld program (or voltage and wire speed or in alternative the current and wire speed or the current and voltage, in this late case the current is directly related to the wire speed). The gas type selection is dependent on the wire material and for a specific wire material the database has usually one or more different gases for selection.

The weld machines usually have at least two main modes of operation: Conventional and Synergic.

In the Conventional mode the operator controls two parameters: voltage and wire speed (or the alternative parameters mentioned previously).

Synergic mode can use a DC current or a pulsed current. In this latter case the machine uses a database with already stored ideal parameters for all current range of the selected program. A program is associated with the mode (DC or pulsed) and also with the diameter and wire material type. For the same program there is the possibility to select several gases or just one.

The mode (conventional or synergic) and DC or pulsed weld selection are made depending on the weld machines, by switches/knobs or by a menu. The selection of the program uses the same procedure. To select a program, and depending on the weld machines the user can select a number or a program name. This procedure has the associated problem of knowing previously the programs of the machine. The majority of the actual machines use a step by step selection program with the following order: a) Wire diameter selection (example 1 mm), b) Wire type selection (example stainless steel 316), c) Gas mixture selection (example Argon 98% - $O_2$ 2%).

In actual welding machines there is the need for the operator to manually input diameter, wire type and gas. The main problem is that some times the welder makes a mistake when selecting a wire type, for example the welder needs to weld a base material of Stainless steel 316, selects Stainless steel 316 and, in reality, the bobbin is a Stainless steel 304 or Carbon steel. In this case, the weld program is selected correctly but because of the different weld wire the weld will not have good quality. Other common error is the wire diameter (for example selecting 1.6 mm when actually is 1.2 mm). This bad selection affects adversely the weld quality, some times making a weld path unusable.

Several of the existing patents do not cover the problems referred previously, or make some reference without reaching a solution for the resolution of the wire detection problem.

Patent JP20003053536 "Welding wire breakage detector for automatic welding equipment" teaches the detection of supply interruption of the weld wire, but has no reference on the detection of the weld wire material properties.

Patent JP6320294 "Detector for junction wire" discloses a detector for junction wire and tracking of the weld. This detector does not work as a wire material properties detector.

Patent JP60015360 "Remaining wire detector" discloses a detector to detect the remaining wire in a wire bobbin to check the approaching end of the wire bobbin by a magnetic switch "On/Off". Once again, the disclosure is of no use to detect the weld wire material properties.

Patent JP59105509 "Used amount detector for welding wire" reveals a detector for detecting the used size of the weld wire bobbin and is not intended for the detection of material properties.

Patent JP59030479 "Wire detector" discloses a device for detecting the presence or absence of the weld wire by electromechanical means. Also, this patent does not make any disclosure on the detection of material properties.

Patent JP57134276 "Detector for projecting length of core wire of gas shielded arc welding" discloses a detector used for the detection of the "stick out" of the wire when welding and is not used for materials properties checking. The patent does not make any reference that could lead to the present solution.

Patent US6852949 "Welding machine with automatic parameter setting" is the closest prior art to the present invention. This patent discloses a machine in that one of the internal parts is a wire detector. In the preferred embodiment the wire detector is a bar code reader that reads the bar code in the wire bobbin. This bar code reader does not avoid bar code errors as the detection is not carried out on the weld wire itself. Other embodiments of US6852949 are: Bar code wand connected to controller, indentations or bumps in the wire. A last embodiment mention a Coil (inductance) inserted in a resonant circuit. As the detector disclosed in this embodiment only uses one method of magnetic measure, does not guarantee the differentiation between materials, for example, those with relative magnetic permeability very close to value 1. Therefore, with patent "US6852949" it is not possible to differentiate between, for example, copper wire and titanium. The present invention teaches a way of solving this problem as resistivity of copper and titanium are very different. Patent "US6852949" also does not teach a detector that could use other methods for the magnetic properties measurement mentioned in the present application (eddy currents or the discharge of coil inductance current over a very precise resistor).

## Summary of the Invention

This invention is related to an apparatus to detect the properties of the conductive wire and to the use of such apparatus. References to the method used in said apparatus are herein below made to better illustrate the invention but are not part of the present invention.

In more detail, the present invention is directed to a conductive wire properties detector for detecting the properties of a conductive wire characterized by having means for detecting wire diameter, resistivity and magnetic permeability and means for transmitting these parameters to a microcontroller/microprocessor/DSP that compares the values with a database, in this way achieving wire identification.

The detector of the present invention can be used in a broad of situations where a detection of a wire is needed. It has particular relevance for welding. In this field, the main objective to be achieved by this apparatus is to avoid the error of the operator in the selection of the weld wire and to keep an easier operation of the machine buttons (or menus) selection by the weld machine operator.

The weld machine will ideally have a sensor to detect the weld wire material and its diameter. This sensor should allow the integration with most modern machines, so the machine could detect the wire properties and diameter automatically and thus the selection of the appropriate synergic weld program.

The invention allows detection if the machine is on the synergic mode, and the operator inserts a new weld wire bobbin, if the default gas selection is the correct, the weld machine operator can immediately start to weld after pressing the detection button, only needing to set the desired current or wire speed. This avoids the present situation in weld machines of selecting the diameter, material and gas before welding. The operator has only to select the mode (conventional or synergic and the gas, if not the default, for the weld wire material automatically detected by the present invention).

This will improve the weld quality by reducing errors on the wire material and diameter selection and also reduce the operator work on the machine buttons or menus.

The apparatus is inserted between the weld bobbin and the wheels of the motor that pulls the wire in a weld machine. The wire is inserted inside the apparatus in a channel whose dimensions are just a little bigger in diameter than the maximum wire diameter to be detected, on both ends of the invention there are wire guides.

The device uses a sensor for reading the wire diameter and two methods for getting information from the wire: a) - Electrical resistivity, b) - Magnetic permeability.

With these three parameters (resistivity, magnetic permeability and diameter) the sensor uses an internal database stored in a microcontroller/microprocessor/DSP to select the wire. This database has a set of values for wire diameter with each of these values having a dispersion of readings that is stored on the database as maximum and minimum limits for a certain diameter values. For the other parameters the database uses the same method. It has a central (average value) and maximum and minimum limits for the parameter.

The two parameters measured for each diameter of wire guaranties a better chance of never finding two materials with the same properties. If only one of the parameters was used, like resistivity, it would be possible to find an alloy that would have the same resistivity parameter as other different alloy.

**Broad description of the preferred embodiments**

In the first embodiment the apparatus uses two solenoids for the resistivity/conductivity electrodes to touch the wire to be measured and a toroid inductor with a gap in the wire guide for the magnetic properties measurement. Each solenoid is attached to a rod that is attached to a contact cylinder made in a good conductive material and resistant to erosion with the wire to be tested. The measure of electrical resistance for the calculation of resistivity is made between the contact cylinders in the down position of the solenoids. The diameter is measured by a linear resistive sensor (or any other type of linear measuring distance sensor) that is placed in the centre of the contact cylinders of the resistive sensor and in direct contact with one of the contact cylinders.

The apparatus has a digital control for the selection of the amplification scales of the measures (resistivity and magnetic permeability), digital control of the multiplexer, and two analog inputs for diameter, magnetic permeability and electrical resistivity/conductivity sensing. The diameter and electrical resistivity are multiplexed. The system uses one PWM (pulsed width modulation) output for solenoid force control and other PWM for frequency generator to use on the magnetic circuit sensor. An output is used to indicate to the weld machine that the detector is connected to it. The inputs for sensor control can be made differently (for example, three analog channels for the sensors, digital control of the solenoids, use of a microprocessor/microcontroller/DSP for sending the info in a serial port to the weld machine and so on.)

The device is small in length and can be applied to all welding machines with wire bobbins requiring only a few modifications.

The device operates by first pressing a detection button with no wire inside the device that zeros itself in the upper positions of the solenoids, then a wire is inserted and the diameter, resistivity and magnetic characteristics are measured for the selected wire in the down solenoids position. At the end the device warns the main controller that the detection as ended and returns the wire material and the diameter selected by the user.

The detection is based on the variation of the resonance frequency and the calculation of a setup point for reference that is near the resonance frequency.

The measure bobbin is sufficiently apart from the metallic and magnetic structures of the weld machine and the apparatus for decreasing false measures of magnetic permeability of the test wire.

In the second embodiment the device uses the same sensor for diameter but this time mounted in the up position with is rod down (is possible also to use the down position), in the rod there is an axis for a wheel that moves with the motion of the wire. The diameter sensor has a second rod at 90° degrees connected to the first one for the user to lift and help to put the test wire in the interior of the apparatus. In this embodiment there are two coil solenoids (as fixed inductances) both of them with air nucleus and equal. In one of them the test wire passes through the centre. The device first measures inductance with air nucleus the discharge of a fixed DC current through a precision resistor until a certain voltage in the resistor and then measures the discharge time of the other solenoid where the nucleus is the test wire the difference in the discharge time is proportional to the magnetic permeability of the wire.

The next step is using one or different frequencies and measuring the electrical resistance and reactance and use the same method as the one used for measuring electrical resistivity with eddy currents. For increased resolution the system uses the two equal inductance bobbins in a bridge configuration. The main advantage of this method is that it does not use electrical and mechanical contact for measuring the electrical resistivity thus there is no erosion in the detector like the first embodiment where the electrodes touch the test wire.

The actuators for the touch of the electrodes for the resistivity metering are not limited to solenoids, electric servos, piezoelectric mechanical devices can be used for the same purpose, and the only condition is that the actuator can be force controlled in order to maintain the same contact resistance for the same wires. The number of actuators can be two as in the preferred embodiment or just one that drives both electrodes (of resistivity measure) or even more than two.

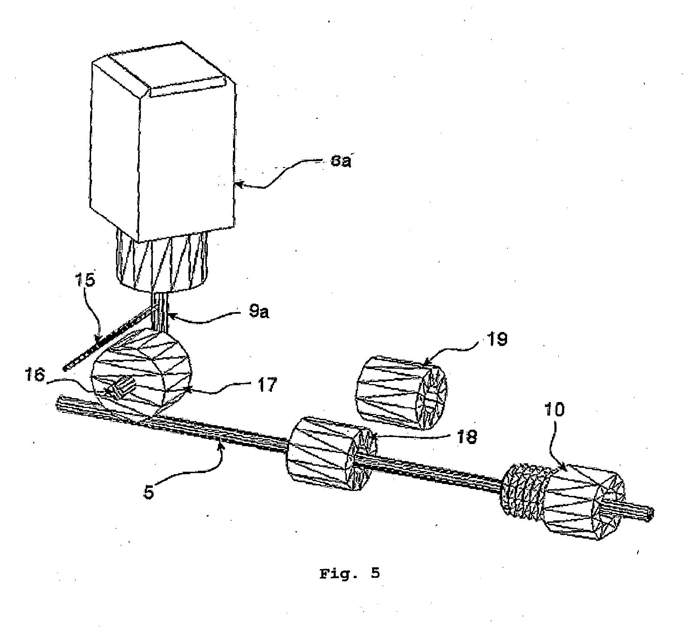

The measurement of resistivity can also be made by a non touching device using the eddy currents measurement principle, like the one of the second embodiment (figure 5).

The shape of the touch electrodes with the wire to be tested can be different from a cylinder shape, can even be wheels that roll with the movement of the test wire. The circuit conditioning for sensing resistivity can be different than the used Wheatstone bridge. It only needs to detect changes in resistivity, using DC current or low frequency AC current for the test.

The sensor should always be designed to maximize the variation of the measured magnetic characteristic (usually magnetic permeability). The shape of the sensor can be a linear bobbin in a cylinder form involving the wire to be measured or be a transformer with the test wire placed in the gap of the transformer and measuring the variation of the magnetic reluctance of the transformer.

The present invention is in no way limited to the form and type and electronic conditioning of the magnetic sensor.

The diameter sensor is a resistive linear sensor in the preferred embodiment, but other types of distance sensors can be used, such as LVDT sensors, optic measuring sensors, etc. The present invention is not limited by the type of diameter sensors or the type of electronic circuit conditioning.

The position and fixation to the weld machine or the wire feeder is also in no way a limitation for the present invention. The fixation just needs to be between the wire feeder motor and the weld bobbin. The apparatus just needs a space for the detector and that the weld wire passes inside the detector of the present invention, with centering mechanics for the wire to be tested. Two or four screws adjust the up/down position (and a small rotation) and more two or four screws adjust the inside/outside (and a small rotation) position. The application to a weld machine can be made inside the wire feeder or in the main machine if the wire feeder is internal to the weld machine.

The internal hole channel can have a centring mechanism for the test wire.

The invention can be applied to other industrial sectors that need a conductor wire properties detector.

The detector can have analog/digital channels like the preferred embodiment and use an internal integrated microcontroller/microprocessor/DSP for sending the information of the detected material and diameter to the main weld machine controller by serial or parallel communication, or have an external microcontroller/microprocessor/DSP.

The conductive wire type sensor can send the information for the main weld machine controller by serial or parallel communication. The wire detection is made by a switch or digital input. The conditioning circuits for the 3 different independent sensors are made in one or several boards placed on the back of the apparatus at minimal possible distance in order to minimize electrical resistance losses, errors and noise. The conditioning circuits are electrically isolated from the machine power supplies.

The main weld machine can be of any type like old switches/knobs for setting the weld type or modern menu driven machines digitally controlled. The detection can be triggered by the operator by pressing a button, or in alternative the wire can be detected by a micro-switch, a magnetic sensor or any other sensor that detects the input of a new bobbin wire in the detector interior.

The apparatus has a shunt (or any other digital or analog signal) for signalling the main weld machine controller that the apparatus is inserted in the machine. Because of this the apparatus can be removed and the weld machine will work in a normal, non automatic detection of weld wire way.

The detector informs the main weld controller of the diameter, electric resistivity and magnetic characteristics of the material detected in the weld wire. The information passed to the main weld machine controller can also be a "string" with the material and diameter information or any other defined code for the diameter and weld wire material.

The materials database can be on the internal microcontroller/microprocessor/DSP of the detector or in an outside microcontroller/microprocessor/DSP.

**Brief description of the drawings**

Figure 1 is a perspective view of the main elements of the present invention preferred embodiment.

Figure 2 is the outside view of the present invention preferred embodiment.

Figure 3 is a side view of the main elements of the preferred embodiment, being the solenoids in the upper position.

Figure 4 is a side view of the main elements of the preferred embodiment, being the solenoids in the down position (touch position with the wire to be detected).

Figure 5 is a perspective view of the main elements of an exemplary conductor wire properties detector that is not the subject of the present invention.

**Specific description of the preferred embodiment**

Preferred embodiments of the present invention will now be explained in detail, making reference to the accompanying drawings and are not intended to limit the scope of the invention.

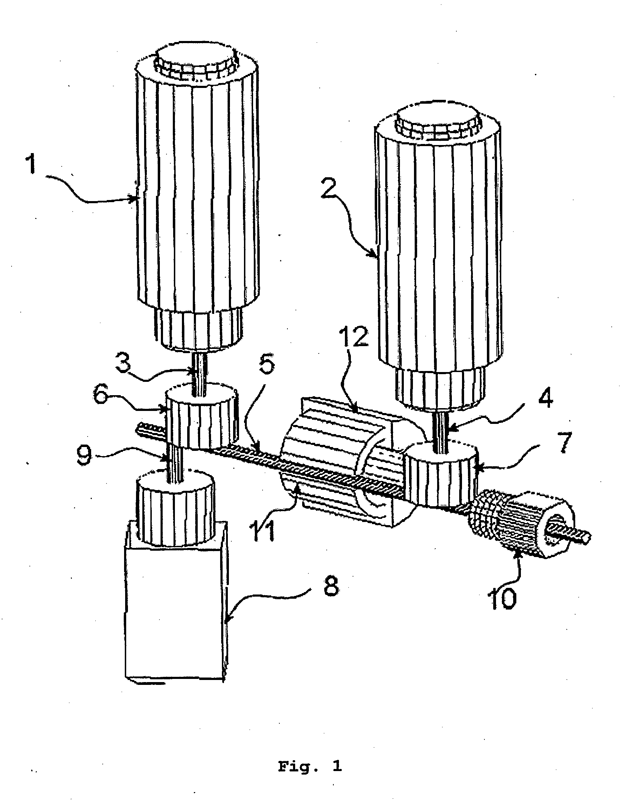

Figure 1 is the main schematic representation of the present invention, without any physical support to the weld machine (or wire feeder).

In the preferred embodiment two actuators are used for getting the electrical electrodes (for resistivity measurement) in touch with the wire and will always have an external bobbin inductance for measuring the magnetic permeability.

In this embodiment solenoids 1, 2 have a rod 3, 4 and, at the end, a metallic contact cylinder 6, 7 to make the mechanical and electrical contact to the wire 5 to be measured. The contact cylinders 6 and 7 have attached electrical wires (not shown) of very low electrical resistance for the current (or voltage) injection on the measuring wire 5. The electrical resistance is measured by inserting the wire 5 in one of the arms of a Wheatstone bridge of low ohmic value.

For maximizing the detection, the system uses the maximum possible current but not high enough to cause the wire or the resistors to heat and affect the resistance reading. The wire is guided inside the detector by a wire guide 10 and by a hole channel (not shown) interrupted in the contact points for the cylinders 6, 7 and for the presence of toroid 11, being the hole channel a little bigger in diameter than the maximum wire diameter to be measured. The contact electrodes are metallic, made from a hard and electrically conductive non magnetic alloy (for example: stainless steel 316) and non oxidizable.

Toroid 11 is attached to a coil inductance 12 used for measuring the magnetic characteristics of the tested wire 5.

The circuit uses a toroid with a cross section as the maximum wire and maximum possible size in the wire length direction (in this embodiment the diameter is 3 mm for a wire diameter of 2.6 mm). The bobbin uses the maximum possible number of turns to maximize the effect of variation of inductance. The present embodiment is a resonant circuit with a bobbin and a capacitor, and the detection is based on the variation of the resonance frequency and the calculation of a setup point for reference that is near the resonance frequency. Toroid 11 is mounted on a non magnetic material with a cylinder shape to help fixation to the system. The distance of the detection toroid is the necessary one to avoid that external high magnetic permeability materials influence the magnetic property measure (in present embodiment is 15 mm).

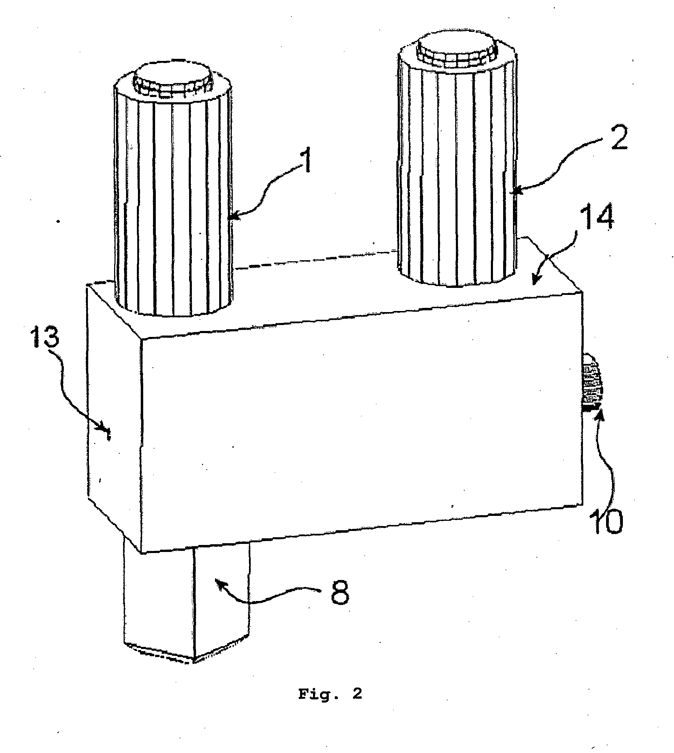

The apparatus is mounted as shown in figure 2. In this figure, items 1 and 2 are solenoids, 14 is a non magnetic and non conductive material (low magnetic permeability material, such as plastic) that is used to fix the solenoids and the diameter sensor 8 and the wire input guide 10. The plastic support 14 has a hole 13 on the other side for passing the weld wire. The plastic support 14 is also used to fix the toroid for the measurement of the magnetic property of the wire and to connect the apparatus to the weld machine. The apparatus is fixed to the wire feeder/weld machine by any known system that allows up/down adjustment and for inside/outside wire feeder adjustment. A possible fixing apparatus has at least two screws for each of the adjustments that make possible to adjust also some rotation for each fixation axis.

The device has two states: the non touching state with the actuators off so the electrical test electrodes for the measure of resistivity are not in mechanical contact with the conductive test wire (in this state the inductance bobbin circuit zeroes for the air gap) and the test state, in which the actuators are on a fixed calibrated force by a fixed PWM control wave. The electrodes are in touch with the test wire and the linear diameter sensor is on the minimum distance measure.

For the detection process to begin a button is pressed and the air is measured (magnetic property) the circuits zeroed and a led for zero OK is lighted and then the wire is pressed by the actuators with a fixed controlled force and resistivity or wire and permeability and diameter are measured. The information is then transferred to the weld machine controller by serial or parallel interface.

All the electrical circuits of the apparatus are electrically isolated from the weld power supply to avoid interferences and false readings.

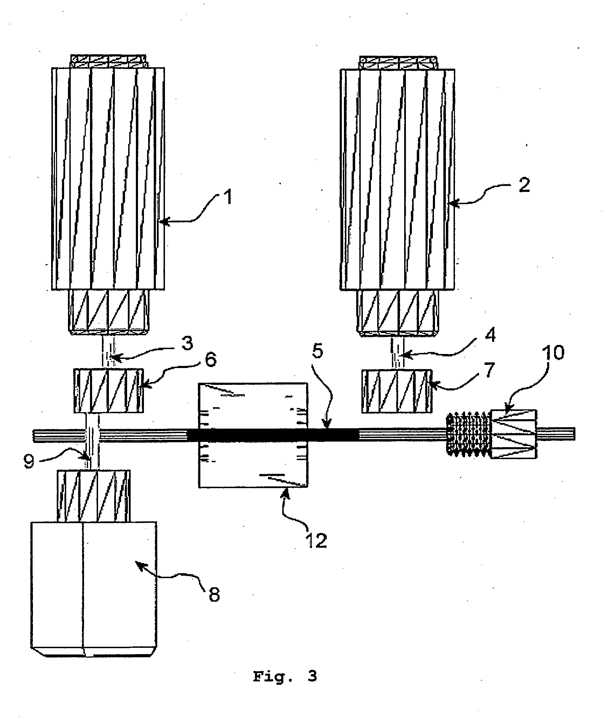

The apparatus has two operating positions. Figure 3 is the normal not contacting position. The actuators, solenoids 1 and 2 are not energized so the touch cylinders 6 and 7 are not in mechanic contact with the wire 5. The rod 9 of the diameter sensor 8 is always in contact (the sensor as an internal spring that pushes the rod 9) with the contact cylinder 6 of solenoid 1. The apparatus is used first without a wire inside, to get the zero of the magnetic conditioning circuit. Then the wire is inserted and the measurement of the magnetic characteristic of the wire is done using coil inductance 12.

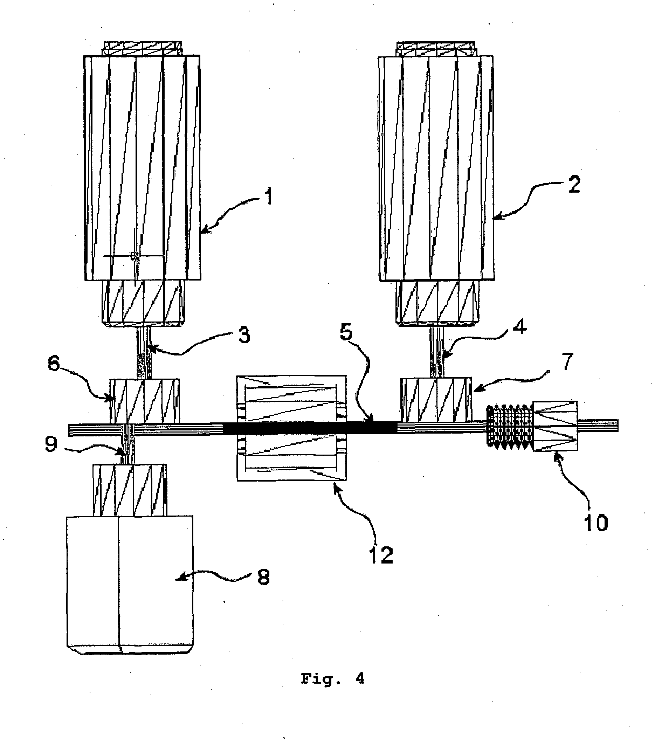

In figure 4 the apparatus has the actuators 1 and 2 energized and controlled by a Pulsed Width Modulator (PWM) for a precise force control. The cylinders 6 and 7 are in touch with the test wire 5. Rod 9 of the diameter sensor 8 is at the lowest linear distance. Both contact cylinders are in touch with the wire 5 and with a precise force. The apparatus measures the electrical resistivity. The magnetic property is measured by coil inductance 12.

The electronic circuits used for signal processing and acquisition are placed at the closest possible distance from the present invention, in order to reduce the noise and to reduce the electrical impedance of the electrode and bobbin inductance cables to minimize the detection error of the circuits. In a preferred location it is placed at the back of the external side of the plastic support 14.

The electronic circuits are electrically isolated from the main weld power supply to avoid interference in the parameters readings.

Figure 5 is an exemplary conductor wire properties detector that is not the subject of the present invention, wherein the diameter sensor 8a is used on the vertical up position. Its internal spring will press the rod 9a attached to wheel 17 by axis 16 against the test wire 5. The test wire is, like in the preferred embodiment, constrained by an internal channel (not seen in figure 5) guided by wire guide 10. Rod 15 attached to rod 9a of the diameter sensor is used as a puling up help when a new wire bobbin is inserted in the wire feeder of the weld machine. Wire guide 10 is used as a guide for the test wire. Solenoid coils 18 and 19 are equal and are used for magnetic permeability and electrical resistivity measurement. The permeability is measured by the time difference in a discharge of the same DC current Io in both solenoids 18 and 19 through two equal precision resistors R until the same predefined voltage Vo. The discharge time difference between solenoid 18 and 19 is proportional to the magnetic permeability.

The Inductance of a coil solenoid is:

$$L = \frac{N^2 A \mu}{S}$$

wherein:

L - Inductance
N - Number of turns
S - Length of solenoid
A - Area of solenoid cylinder section
$\mu$ - Magnetic permeability of internal solenoid core

The discharge of a current in the inductance over a resistor until a certain voltage is characterized by the equation:

$$Vo = Io\ R\ e^{-to\ R/L}$$

wherein

R - Value of precision resistor
Vo - Voltage defined for the discharge stop (reading of time to)
To - Time to discharge until voltage = Vo
Io - Initial coil solenoid current

Calculating for magnetic permability this gives:

$$\mu = -\frac{toRS}{\ln(\frac{Vo}{IoR})N^2 A}$$

This is the reading of permeability for one solenoid.

In the difference method the operation is the following: the first step is to measure the time discharge for the air core solenoid, *Tair,* and then the time discharge for the wire solenoid core, *Twire.* The difference is used to calculate $\mu$*wire* as follows:

$$Twire - Tair = \frac{-\ln(\frac{Vo}{IoR})N^2 A}{RS}(\mu wire - \mu air)$$

All the values are calculated or input variables, the only exceptions are magnetic permeability. This allows the system to calculate the near zero frequency magnetic permeability of the wire.

The difference method, in the equal coil solenoid, cancels the thermal variations in the coil wire and the dilatation variations in the S and A parameters of the solenoids.

The wire resistivity is measured with the same principle as eddy currents used for measuring the material resistivity as a percentage of a reference material. The solenoids are, in this case, used in the arms of a bridge circuit to compensate for heat resistivity changes. The conditioning circuit can use one or different frequencies for the measurement of the wire resistivity. The sensor can use the previously calculated magnetic permeability of the wire for the equations of the eddy currents and helping in the calculation resistivity of the wire.

With this exemplary conductor wire properties detector that is not the subject of the present invention the wire material sensors are not mechanically connected to the test wire.

**Claims**

1.  A conductive wire properties detector for detecting the properties of a conductive wire (5) comprising means for measuring wire diameter (8, 9), magnetic permeability (11, 12) and resistivity (1,2,3,4,6,7), and means for transmitting these parameters to a microprocessor, the microprocessor arranged to compare the measured wire diameter, magnetic permeability and wire resisistivity with a database and in this way achieving wire identification, wherein the means comprise one sensor for reading the wire diameter, one sensor for determining the electrical resistivity and one sensor for determining the magnetic permeability, respectively.

2.  A conductive wire properties detector according to claim 1, **characterized by** said means (8, 9) for measuring the wire diameter being an optical distance measure device.

3.  A conductive wire properties detector according to claim 1, **characterized by** having two actuators (1, 2), said actuators (1, 2) arranged for pressing actuators electrodes (6, 7) against the conductive wire (5) allowing to measure an electrical resistance.

4.  A conductive wire properties detector according to claim 1, **characterized by** having one actuator (1), said actuator (1) arranged for a mechanical connection to said means (6, 7) for a resistivity measure in the wire (5).

5.  A conductive wire properties detector according to claim 1, **characterized by** having a resonant circuit with an inductance bobbin (12) and a capacitor arranged to sense magnetic properties of said wire (5), wherein a magnetic field of which being conditioned by a toroid (11) with a gap surrounding said conductive wire (5).

6.  A conductive wire properties detector according to claim 5, **characterized by** said bobbin (12) being a solenoid cylinder inserted in a bridge measuring circuit in which an opposite arm has an equal solenoid cylinder, with air inside, arranged to maximize a differential measure of inductance.

7.  A conductive wire properties detector according to claim 1, **characterized by** said microprocessor being arranged to select wire welding parameters after achieving wire identification.

8.  A conductive wire properties detector according to claim 1, **characterized by** said database having a set of values for each of wire diameter, resistivity and magnetic permeability, with each of these values being stored on the database as maximum and minimum limits, allowing for the identification of the wire (5) and selection of an appropriate weld parameters.

9.  Use of a detector according to claim 1 for detecting the properties of a weld wire.

**Patentansprüche**

1.  Leitungsdraht-Eigenschaftsdetektor zum Ermitteln von den Eigenschaften eines Leitungsdrahtes (5), der Mittel zum Messen von Drahtdurchmessern (8, 9), magnetischer Durchlässigkeit (11, 12) und Widerstandsfähigkeit (1, 2, 3, 4, 6, 7), und Mittel zum Übertragen solcher Parameter an einen Mikroprozessor umfasst, wobei der Mikroprozessor zum Vergleichen von gemessenem Drahtdurchmesser, magnetischer Durchlässigkeit und Drahtwiderstandsfähigkeit mit einer Datenbank angeordnet ist und nach dieser Art die Drahterkennung erzielt, wobei die Mittel einen Sensor zum Lesen des Drahtdurchmessers, einen Sensor zum Erfassen der elektrische Widerstandsfähigkeit und einen Sensor zum Ermitteln der magnetischer Durchlässigkeit beziehungsweise umfassen.

2.  Leitungsdraht-Eigenschaftsdetektor nach Anspruch 1, **dadurch gekennzeichnet, dass** das genannte Mittel (8, 9) zum Messen des Drahtdurchmessers ein optisches Weglänge-Messgerät ist.

3.  Leitungsdraht-Eigenschaftsdetektor nach Anspruch 1, **dadurch gekennzeichnet, dass** er zwei Aktuatoren (1, 2) hat, wobei die genannten Aktuatoren (1, 2) zum Drücken von den Aktuatorenelektroden (6, 7) gegen den Leitungsdraht (5), um das Messen eines elektrischen Widerstandes zu erlauben, angeordnet sind.

**4.** Leitungsdraht-Eigenschaftsdetektor nach Anspruch 1, **dadurch gekennzeichnet, dass** er einen Aktuator (1) hat, wobei der genannte Aktuator (1) für eine mechanische Verbindung mit den genannten Mitteln (6, 7) für eine Messung der Widerstandsfähigkeit auf dem Draht (5) angeordnet ist.

**5.** Leitungsdraht-Eigenschaftsdetektor nach Anspruch 1, **dadurch gekennzeichnet, dass** er einen Resonanzkreis mit einer Induktivitätsspule (12) und einem Kondensator so angeordnet hat, um magnetische Eigenschaften des genannten Drahtes (5) zu ermitteln, wobei dessen Magnetfeld durch einen Toroid (11) mit einem Luftspalt um dem genannten Leitungsdraht (5) herum bedingt ist.

**6.** Leitungsdraht-Eigenschaftsdetektor nach Anspruch 5, **dadurch gekennzeichnet, dass** die genannte Spule (12) ein in einer Brückenmessschaltung eingeführter Solenoidzylinder ist, wobei dessen gegenüberliegender Arm einen gleichen mit Innenluftraum Solenoidzylinder hat, um eine differentiale Induktivitätsmessung zu maximieren, angeordnet ist.

**7.** Leitungsdraht-Eigenschaftsdetektor nach Anspruch 1, **dadurch gekennzeichnet, dass** der genannte Mikroprozessor um Drahtschweißparameter nach der Drahtidentifizierung auszuwählen, angeordnet ist.

**8.** Leitungsdraht-Eigenschaftsdetektor nach Anspruch 1, **dadurch gekennzeichnet, dass** die genannte Datenbank einen Satz Werte für jedes Drahtdurchmesser, Widerstandsfähigkeit und magnetische Durchlässigkeit hat, wobei jedes von solchen in der Datenbank gespeicherten Werten als Maximum- und Minimum-Grenzwert gilt, um die Identifizierung des Drahtes (5) und die Auswahl eines geeignetes Schweißparameters zu berücksichtigen.

**9.** Anwendung eines Eigenschaftsdetektors nach Anspruch 1, um die Eigenschaften eines Schweißdrahtes zu ermitteln.

**Revendications**

**1.** Détecteur de caractéristiques de fil conducteur pour détecter les caractéristiques d'un fil (5) conducteur, y compris des moyens pour mesurer le diamètre du fil (9, 9), la perméabilité magnétique (11, 12) et la résistivité (1, 2, 3, 4, 6, 7) et des moyens pour transmettre ces paramètres à un microprocesseur, le microprocesseur étant disposé pour comparer le diamètre du fil mesuré, la perméabilité magnétique et la résistivité du fil avec une base de données et de cette façon parvenir à l'identification du fil, lesdits moyens comprennant un capteur pour lire le diamètre du fil, un capteur pour déterminer la résistivité électrique et un capteur pour déterminer la perméabilité magnétique, respectivement.

**2.** Détecteur de caractéristiques de fil conducteur selon la revendication 1, **caractérisé en ce que** ledit moyen (8, 9) pour mesurer le diamètre du fil est un appareil de mesure du parcours optique.

**3.** Détecteur de caractéristiques de fil conducteur selon à revendication 1, **caractérisé en ce qu'**il a deux dispositifs (1, 2) de commande, lesdits dispositifs (1, 2) de commande étant disposés pour appuyer sur des électrodes (6, 7) des dispositifs de commande contre le fil (5) conducteur, permettant ainsi de mesurer une résistance électrique.

**4.** Détecteur de caractéristiques de fil conducteur selon la revendication 1, **caractérisé en ce qu'**il a un dispositif (1) de commande, ledit dispositif (1) de commande étant disposé pour assurer une connexion mécanique auxdits moyens (6, 7) pour une mesure de la résistivité sur le fil (5).

**5.** Détecteur de caractéristiques de fil conducteur selon la revendication 1, **caractérisé en ce qu'**il a un circuit résonnant avec une bobine (12) d'inductance et un condensateur disposé pour capter les caractéristiques magnétiques dudit fil (5), dont un champ magnétique est conditionné par une bobine (11) toroïdale avec un entrefer entourant ledit fil (5) conducteur.

**6.** Détecteur de caractéristiques de fil conducteur selon la revendication 5, **caractérisé en ce que** ladite bobine (12) est un cylindre à solenoïde inséré dans un circuit de mesure à pont, où un bras opposé a un cylindre à solenoïde égal, avec de l'air à l'intérieur, disposé pour maximiser une mesure d'inductance différentielle.

**7.** Détecteur de caractéristiques de fil conducteur selon la revendication 1, **caractérisé en ce que** ledit microprocesseur est disposé pour le choix des paramètres de soudage du fil, après avoir réalisé l'identification du fil.

8. Détecteur de caractéristiques de fil conducteur selon la revendication 1, **caractérisé en ce que** ladite base de données a un ensemble de valeurs pour chaque diamètre du fil, résistivité et perméabilité magnétique du fil, chacune de ces valeurs étant mémorisée dans la base de données en tant que des limites maximum et minimum, tenant compte de l'identification du fil (5) et du choix de paramètres de soudage convenables.

9. Utilisation d'un détecteur selon la revendication 1, pour détecter les caractéristiques d'un fil à soudage.

Fig. 1

Fig. 2

Fig. 3

Fig. 4

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 20003053536 B
- JP 6320294 B
- JP 60015360 B
- JP 59105509 B
- JP 59030479 B
- JP 57134276 B
- US 6852949 B